# EUROPEAN PATENT APPLICATION

(11) **EP 2 000 460 A1**
(43) Date of publication of application: **10.12.2008**
(21) Application number: 07010924.4
(22) Date of filing: 02.06.2007
(51) Int. Cl.: C07C 309/03, C07F 9/09, C11D 1/29, C11D 1/34, C11D 1/46, C07C 305/02

(54) **New surfactants in detergent compositions**

(71) Applicant: Dalli-Werke GmbH & Co. KG, 52224 Stolberg (DE)
(72) Inventor: De Boer, Robbert, 8167 PH Oene (NL); Mol, René, 7913 TL Hollandscheveld (NL); Schuldink, Henk, 7772 KH Hardenberg (NL); Van Ommen, Janco, 8031 EZ Zwolle (NL)
(74) Representative: Polypatent

(57) **Abstract**

The present invention relates to detergent compositions, especially automatic dishwashing detergents (ADD) compositions, comprising surfactants having at least one complexing group.
The object of the present invention was to improve the filming and spotting results of ADD compositions.
This object is met by a detergent composition comprising at least one surfactant having the general formula [R¹O(CH₂CH₂O)ₓ(CH₂CH₂CH₂O)_{y}]ₙZ wherein R¹ refers to a linear or branched, saturated or unsaturated hydrocarbon group having 6 to 30 carbon atoms, preferably 8 to 24 carbon atoms, x is an integer from 6 to 200, y is 0 or an integer of less than 100 and x+y is less than 200, Z is a complexing group, derived from phosphoric compounds, phosphonates, sulphonic compounds, sulphonates, or amino polycarboxylic acids and n is 1,2 or 3 for respectively a mono-ester, a di-ester or a tri-ester.

## Description

### TECHNICAL FIELD

The present invention relates to detergent compositions, especially automatic dishwashing detergents (ADD) compositions, comprising surfactants having at least one complexing group.

### BACKGROUND OF THE INVENTION

During the cleaning in an automatic dishwasher deposits can occur on the inside of the machine and on the load of the dishwasher. The chances of this happening are especially high when tab water with a high water hardness is used. These deposits can be of organic or inorganic origin.

A way for minimizing the amount deposit is the use of dispersing agents. These dispersing agents prevent the not water soluble particles from depositing on the load or on the inside of the dishwashing machine by keeping them dispersed in the water.

Another way of minimizing the deposits is by modifying the surface of the load. Ethoxylated fatty alcohols are known in the art to be used in automatic dishwashing detergent (ADD) compositions to minimize the deposit on the machine load.

The effect of these deposits become mainly visible during rinse-aid performance tests and filming tests.

In this invention we found that when surfactants, preferably ethoxylated fatty alcohols with complexing groups are applied in the ADD formulation this improves the performance in the rinse-aid and filming tests.

The present invention refers to the use of surfactants, preferably of ethoxylated fatty alcohols, having at least one complexing group, in an automatic dishwashing detergent (ADD) composition.

One problem in automatic dishwashing is the "filming" and "spotting" which can be seen on the load of the machine, if the soil and the salts can not be dissolved/dispersed good enough in the cleaning water.

The use of surfactants in ADD compositions are well known in the art. EP-A 1 524 313 describes the use of a special type of surfactants, called "carry over surfactants" in ADD compositions.

The object of the present invention was to improve the filming and spotting results of ADD compositions.

This object is met by a detergent composition comprising at least one surfactant having the general formula [R¹O(CH₂CH₂O)ₓ(CH₂CH₂CH₂O)_{y}]ₙZ wherein R¹ refers to a linear or branched, saturated or unsaturated hydrocarbon group having 6 to 30 carbon atoms, preferably 8 to 24 carbon atoms, x is an integer from 6 to 200, y is 0 or an integer of less than 100 and x+y is less than 200, Z is a complexing group, derived from phosphoric compounds, phosphonates, sulphonic compounds, sulphonates, or amino polycarboxylic acids and n is 1, 2 or 3 for respectively a mono-ester, a di-ester or a tri-ester.

According to the invention surfactants, preferably surfactants of the type of ethoxylated fatty alcohols and agents with complexing groups are used as a base material, which are reacted to produce surfactants having at least one complexing group.

Surfactants which can be used in a starting material to prepare the surfactants according to the present invention are surfactants of the general formula R¹O(CH₂CH₂O)ₓ(CH₂CH₂CH₂O)_{y}H, in which R¹ represents a linear or branched, saturated or unsaturated hydrocarbon residue with 6 to 30 C atoms, preferably 8 to 24 C atoms, x is an integer of 6 to 200, y is 0 or an integer of less than 100 and x+y is less than 200. In a preferred embodiment, in at least one of the carry over surfactants used, x is at least 6, preferably greater than 15, more preferably greater than 25, and particularly preferably greater than 40, but less than 200, R¹ is preferably a linear, saturated hydrocarbon residue.

Further suitable surfactants are nonionic surfactants of the formula R²O[CH₂CH(CH₃)O]ₓ[CH₂CH₂O]_{y}[CH₂CH(OH)R³], in which R² denotes a linear or branched aliphatic hydrocarbon residue with 4 to 18 carbon atoms or mixtures thereof, R³ denotes a linear or branched hydrocarbon residue with 2 to 26 carbon atoms or mixtures thereof and x denotes values between 0.5 and 1.5 and y denotes a value of at least 6, preferably of at least 10, more preferably of at least 15.

Further preferred usable nonionic surfactants are the end group-terminated poly(oxyalkylated) nonionic surfactants of the formula R⁴O[CH₂CH(R⁵)O]ₓ[CH₂]ₖCH(OH)[CH₂]ⱼOR⁶, in which R⁴ and R⁶ denote linear or branched, saturated or unsaturated, aliphatic or aromatic hydrocarbon residues with 1 to 30 carbon atoms, R⁵ denotes H or a methyl, ethyl, n-propyl, iso-propyl, n-butyl, 2-butyl or 2-methyl-2-butyl residue, x denotes values between 1 and 30, k and j denote values between 1 and 12, preferably between 1 and 5. If the value of x is 2, each R⁶ in the above formula may be different. R⁴ and R⁵ are preferably linear or branched, saturated or unsaturated, aliphatic or aromatic hydrocarbon residues with 6 to 22 carbon atoms, wherein residues with 8 to 18 C atoms are particularly preferred. H, -CH₃ or -CH₂CH₃ are particularly preferred for the residue R⁶. Particularly preferred values for x are in the range from 1 to 20, in particular from 6 to 15.

As described above, each R⁵ in the above formula may be different if x is 2. In this manner, it is possible to vary the alkylene oxide unit in the square brackets. For example, if x denotes 3, the residue R⁵ may be selected in order to form ethylene oxide (R⁵ = H) or propylene oxide (R⁵ = CH₃) units, which may be attached to one another in any sequence, for example (EO)(PO)(EO), (EO)(EO)(PO), (EO)(EO)(EO), (PO)(EO)(PO), (PO)(PO)(EO) and (PO)(PO)(PO). The value 3 for x has been selected here by way of example and may perfectly well be larger, wherein the range of variation increases as the value of x rises and for example comprises a large number of (EO) groups combined with a small number of (PO)groups, or vice versa.

Particularly preferred end group-terminated poly(oxyalkylated) alcohols of the above formula exhibit values of k = 1 and j = 1, such that the above formula is simplified to R⁴O[CH₂CH(R⁵)O]ₓCH₂CH(OH)CH₂OR⁶. In the latter-stated formula, R⁴, R⁵ and R⁶ are as defined above and x denotes numbers from 1 to 30, preferably of 1 to 20 and in particular of 6 to 18. Particularly preferred surfactants are those in which the residues R⁴ and R⁵ comprise 9 to 14 C atoms, R⁶ denotes H and x assumes values from 6 to 15.

Particularly preferred surfactants usable as starting materials for preparation of the surfactants of the present invention consist to an extent of more than 45%, preferably of more than 60%, particularly preferably of more than 70% of their molecular weight of hydrophilic groups. The preferred surfactants can be liquid at 15°C, preferably have a melting or solidification point of above 25°C, preferably above 30°C and particularly preferably above 35°C. In distilled water, preferred surfactants have a cloud point of above 50°C, preferably above 85°C, more preferably of above 90°C and particularly preferably of above 95°C.

In one embodiment a surfactant with a melting point of above room temperature is an ethoxylated nonionic surfactant which has been obtained from the reaction of a monohydroxyalkanol or alkylphenol having 6 to 20 C atoms with preferably at least 25 mol, particularly preferably at least 30 mol, in particular at least 40, 50 or 80 mol of ethylene oxide per mol of alcohol or alkylphenol.

One preferred nonionic surfactant to be used, which is solid at room temperature, is obtained from a linear fatty alcohol having 16 to 20 carbon atoms (C₁₆-C₂₀ alcohol), preferably a C₁₈ alcohol and at least 25 to 100 mol of ethylene oxide. Among these, the "narrow range ethoxylates" (see above) are particularly preferred.

"Gemini" surfactants may also be considered as suitable surfactants. These are generally taken to mean such compounds which assume dimeric form and, in comparison with monomeric surfactants, exhibit excellent adsorption behaviour.

In one embodiment of the invention, at least two different carry over surfactants can be used, for example two surfactants with the same fundamental formula, but different contents of (EO)/(PO) units to prepare the surfactants of the present invention, for example it is possible to use two carry over surfactants which both have the fundamental formula R¹O(CH₂CH₂O)ₓ(CH₂CH₂CH₂O)_{y}H, in which R¹ in both surfactants represents a linear or branched, saturated or unsaturated hydrocarbon residue with 6 to 30 C atoms and x in one surfactant is an integer of 6 to 30 and in the other surfactant is an integer of 50 to 100, y in each case is an integer of less than 100 and x+y is less than 200. It is, however, also possible to use at least two carry over surfactants having different types of the above-described fundamental formulae.

According to the present invention these surfactants are reacted with compounds providing complexing groups to the surfactants. Preferably the surfactants are reacted with compounds explained in detail below, resulting in at least one ester bonding. Preferably the reaction product is a mono-, di- or tri-ester or a mixture thereof. These surfactants having the at least one complexing group can be described by the formula [R¹O(CH₂CH₂O)ₓ(CH₂CH₂CH₂O)_{y}]ₙZ wherein R¹ refers to a linear or branched saturated or unsaturated hydrocarbon group having 6 to 30 carbon atoms, preferably 8 to 24 carbon atoms, x is an integer from 6 to 200, y is 0 or an integer of less than100 and x+y is less than 200, Z is a complexing group, derived from phosphoric compounds, phosphonates, sulphonic compounds, sulphonates, or amino polycarboxylic acids and n is 1, 2 or 3 for respectively a mono-ester, di-ester or a tri-ester.

All the surfactants having the complexing group(s) are used in the detergent compositions according to the invention in quantities of 0.2 to 20 wt.%, preferably of 0.4 to 10 wt.%, particularly preferably of 0.5 to 6 wt.%. In addition to the surfactants having the ccmplexing groups, the detergent compositions may also contain further surfactants, as it is explained below.

The complexing groups preferably are derived/selected from the below listed five groups;
a) phosphoric compounds
b) phosphonates
c) sulphonic compounds
d) sulphonates
e) amino polycarboxylic acid
Each of these groups is explained in more detail below;

### a) Phosphoric compounds

When phosphoric compounds are bound to fatty alcohol ethoxylates a phosphonated fatty alcohol ethoxylate is obtained. The phosphoric compound e.g. can be selected from the group consisting of
- phosphoric acid
- polyphosphoric acid
- phosphorus pentoxide
- metaphosphoric acid
- phosphorous acid
- hypophosphorous acid

Polyphosphoric acids comply to the general formula H-(POO(OH))n-OH where n corresponds to 2 or more. Some examples are diphosphoric acid (for n=2), tripolyphosphoric acid (n=3), tetrapolyphosphoric acid (n=4).

Metaphosphoric acids comply to the general formula (HPO3)n where n corresponds to 3 or more. Some examples are trimetaphosphoric acid (n=3) and hexametaphosphoric acid (n=6).

### b) Phosphonate

When a phosphonate is bound to a fatty alcohol ethoxylate a phosphonated fatty alcohol ethoxylate is obtained.

According to this invention the term "phosphonate" defines at least one good water soluble organic compound containing one or more C-PO(OH)₂ groups. Some examples of such phosphonates are;
- 1-Hydroxyethane-1,1-diylbisphosphonic acid (HEDP),
- Diethylenetriamine-penta-methylene phosphonic acid (DTPMP),
- Amino tri(methylene phosphonic acid) (ATMP),
- 2-Phosphonobutane-1,2,4-tricarboxylic acid (PBTC),
- Hydroxyphosphonoacetic acid (HPA)
- Ethylenediamine-tetra(methylene phosphonic acid) (EDTMP)
- Hydroxyethylamino-di(methylene phosphonic acid) (HEMPA)
- Hexamethylenediamine-tetra(methylene phosphonic) acid (HDTMP)
- 2-Phosphonobutane-1,2,4-tricarboxylic acid (PBTC)

### c) Sulfonic compound

When a sulfonic compound is bound to a fatty alcohol ethoxylate a sulfonated or sulfated fatty alcohol ethoxylate is obtained. The sulfonic compound can be a sulfonic acid, sulfuric acid, sulfur trioxide, chlorosulfuric acid or sulfamic acid.

### d) Sulfonate

When a sulfonate is bound to a fatty alcohol ethoxylate a sulfonated fatty alcohol ethoxylate is obtained.
According to this invention the term "sulfonate" defines at least one good water soluble organic compound containing one or more C-SOO(OH) groups. Some examples of such sulfonates are;
- 2-acrylamido-2-methyl propane sulfonic acid (AMPS),
- sodium methallyl sulfonate (SMAS)
- sulfamic acid

### e) Amino Polycarboxylic acid

When an amino polycarboxylic acid is bound to a fatty alcohol ethoxylate a carboxylated fatty alcohol ethoxylate is obtained.

According to this invention the term "amino poly carboxylic acid" defines at least one good water soluble organic compound containing two or more N-C-CO(OH) groups. Some examples of such amino poly carboxylates are;
- Aspartic acid
- Nitrilotriacetic acid (NTA),
- Ethylenediaminetetra-acetic acid (EDTA),
- Methylglycinediacetic acid (MGDA),
- Imino-disuccinic acid (IDS),
- Diethylenetriamine pentaacetic acid (DTPA),

It has been surprisingly found that when at least one of the above described surfactants having a complexing group is used in an ADD composition at a level between 0.2% and 20% the amount of deposit(s) found in rinse-aid and filming tests is reduced.

The term "good water soluble" is in this application used for compounds with a solubility in water of at least 10 grams per liter.

### OPTIONAL INGREDIENTS

The ADD composition of the present invention may also comprise optional ingredients like e.g. builders, surfactants, enzymes, dyes, perfume, polymers, complexing agents, bleaching agents, bleach activators, bleach catalysts, dispersing agents, process aids and anti corrosion agents, without any restriction.

All of the optional ingredients known in the state of the art to be effective or usable in detergents might be included.

### BUILDERS

The composition of the present invention may optionally comprise one or more builders.

The main functions of the builders are to soften the washing water, to provide alkalinity and a buffering capacity to the washing liquid and to have an anti redeposition or dispersing function in the detergent composition. The physical properties of the detergent composition are also depending on the builders that are used.

Inorganic or non-phosphate builders include, but are not limited to, phosphonates, silicates, carbonates, sulphates, citrate, citric acid and aluminosilicates.

Organic builders include, but are not limited to, a wide variety of (poly)carboxylated compounds. As used herein polycarboxylate refers to compounds having a plurality of carboxylate groups, preferably at least three carboxylates. Polycarboxylates can generally be added to the composition in acid form, but can also be added in the form of neutralized salt or in a partly neutralized form. When used in a partly or completely neutralized form alkali metals like sodium, potassium and lithium or alkanolammonium salts are preferred.

Phosphoric builders include, but are not limited to, various alkali metal phosphates such as sodium tripolyphosphate, sodium pyrophosphate and sodium orthophosphate.

### SURFACTANTS

The composition of the present invention may optionally comprise one or more surfactants in addition to the ethoxylated fatty alcohols with complexing groups.

The main functions of surfactants are changing the surface tension, dispersing, foam controlling and surface modification. A special type of surfactants used in ADD compositions is the 'carry over' surfactant. The 'carry over' surfactant has the property that some amount of the surfactant used remains in the machine after the rinsing cycles to give a performance during the final rinsing cycle and the (optional) drying phase of the whole washing cycle of the dishwashing machine. This type of surfactant is described in EP-A 1 524 313 in more detail.

As additional surfactants as well can be used the surfactants described herein as starting materials for preparation of the surfactants having a complexing group according to the present invention (see above).

For ADD compositions alkoxylated nonionic surfactants and Gemini surfactants are most commonly used. The alkoxy groups mostly exist of ethyleneoxide, propyleneoxide and/or butyleneoxide. Further all surfactants commonly known to be used in ADD compositions can be contained herein as well.

### ENZYMES

The composition of the present invention may optionally comprise one or more enzymes.

Enzymes are often used to aid the removal of stains. Enzymes react with the soiling and "break it down" into (smaller) particles that have increased water solubility or are easier to disperse in the washing liquid.

The enzymes that can be used in ADD compositions include, but are not limited to, proteases, amylases, lipases, cellulases, mannanase, peroxidase, oxidase, xylanase, pullulanase, glucanase, pectinase and cutinase. These enzymes are known to the skilled artisans and can be used in common amounts.

### ANTI CORROSION AGENTS

The composition of the present invention may optionally comprise one or more anticorrosion agents.

The main function of anticorrosion agents is to minimize the amount of material damage caused on glass and metal during automatic dishwashing.

Glass corrosion occurs because metal ions are dissolved out of the glass surface. This happens more intensively when few hardness ions are present in the water to be bound by the builders or complexing agents present in the ADD composition that is used. Also of influence are the washing temperature and the duration of the cleaning program.

Glass corrosion among others scratches becomes visible in white lines or white clouds on the glass surface. The glass corrosion damage can be "repaired" or the glassware can be protected by anti corrosion agents. The amount of the corrosion can be reduced by using less strong builders and/or complexing agents.

Silver corrosion occurs mainly when oxide, sulfide and/or chlorides are present in the washing liquid (witch is a mixture of tab water; soil and a detergent composition) and do react with the silver metal surface of items that are in the dishwashing machine. The silver salts that arise give a discoloration of the silver metal surface that becomes visible after one or more cleaning cycles in an automatic dishwashing machine.

The occurrence of silver corrosion can be slowed down by use of detergent ingredients that give the silver metal a protective layer or ingredients that bound with the oxide, sulfide or chlorides to prevent them from reacting with the silver metal surface.

The types of anti corrosion agents that often are used in ADD compositions or are described in literature include, but are not limited to, benzotriazole compounds, polymers with an affinity to attach to glass surfaces, organic or inorganic metal salts, or metal salts of biopolymers. The metal can be selected e.g. from the group aluminum, strontium, barium, titanium, zirconium, manganese, lanthanum, zinc, wherein the latter is most commonly applied for the prevention of glass corrosion. Further compounds to be added e.g. are manganese compounds as described in WO 2005/095570.

### POLYMERS

The composition of the present invention may optionally comprise one or more polymers.

The main function of polymers are acting as a dispersing agent or builder. As a dispersing agent the polymer disperses (inorganic) insoluble particles like calciumphosponate.

The polymers that often are used in ADD compositions include, but are not limited to, homo-, co- or a terpolymers of acrylic acid, methacrylic acid or maleic acid. Such polymers are often used with sulphonated groups attached to it. Such polymers are commonly known and are described e.g. in EP-A 1 363 986, EP-A 1 268 729, EP-A1 299 513 and EP-A 0 877 002.

### COMPLEXING AGENTS

The composition of the present invention may optionally comprise one or more complexing agent(s).

The main function of complexing agents is to capture trace metal ions like, Cu(II), Fe(II), Fe(III), Mn(II), Cd(II), Co(II), Cr(III), Hg(II), Ni(II), Pb(II), Pd(II), Zn(II). These ions can interfere with or disturb certain processes of the detergent in the washing machine, like e.g. the bleach performance.

The complexing agent(s) that often are used in ADD compositions include, but are not limited to, S,S-ehtylenediamine-N,N'-disuccinic acid (S,S-EDDS), ethylenediaminetetraacetic acid (EDTA), diethylenediaminepentamethylene phosphonate (DETPMP), nitrilotriacetic acid (NTA), iminodisuccinic acid (IDS), methylglycinediacetic acid (MGDA), diethylenetriaminepentaacetic acid (DTPA), ethylenediaminedihydroxyacetic acid (EDDHA), N(hydroxyethyl)ethylenediaminetriacetic acid (HEDTA), diethylenetriaminepentamethylene phosphonic acid (DTPMPA), hydroxyethylidene-1,1-diphosphonic acid (HEDP), phytic acid, triethylenetetramine (TETA), tetraethylenepentamine (TEPA), aminoethylethanolamine (AEEA), diethylenetriamine (DETA), dipicolinic acid, etc.

### DISPERSING AGENTS

The composition of the present invention may optionally comprise one or more dispersing agents.

The main functions of dispersing agents are to disperse soils in the washing water as well as inorganic and organic salts and the inhibition of crystal growth.

Dispersing agents often are polymeric, have a hydrophilic character and have functional groups. Mostly used functional groups are carboxylic acid, acrylamide, esther, phosphoric acid or sulphonic acid based. Dispersing agents can be used as acid, as neutralized salt or partly neutralized.

The monomers involved in dispersing agents that often are used in ADD compositions include, but are not limited to, acrylic acid, methacrylic acid, maleic acid, sulphonated styrene, styrene, 2-acrylamido-2-methyl propane sulponic acid (AMPS), methallyl sulphonic acid and acryl amide.

### BLEACHING AGENTS

The composition of the present invention may optionally comprise one or more bleaching agents.

Bleaching agents can be used in a detergent either alone or in combination with an bleach activator and/or a bleach catalyst. The function of the bleaching agent is the removal of bleachable stains and to achieve an antibacterial effect on the load and inside of the (dish)washing machine.

The bleaching agents used as a sole bleaching ingredient in detergents react with the substrate that should be cleaned.

When an inorganic oxygen based bleaching agent is used in combination with a bleach activator it does react with the bleach activator. One of the reaction product provides the actual performance.

When an inorganic oxygen based bleaching agent is used in combination with a bleach catalyst it does react with the bleach catalyst. A bleach activator can optionally be present. The oxidized bleach catalyst provides the actual bleach performance.

Bleaching agents that can be used in ADD compositions include, but are not limited to,
- inorganic active chlor compounds
- inorganic peroxygen compounds
- organic peracids.

Examples are sodiumpercarbonate, sodiumperborate monohydrate, sodiumperborate tetrahydrate, hydrogenperoxide, hydrogen peroxide based compounds, peroxymonosulphate, e-phthalimid-peroxo-capronic acid, benzoyl peroxide, sodium hypochlorite, sodium dichloroisocyanurate.
Bleaching agents are often applied in a way that separates them from the chemically fragile remainder of the ingredients of the composition. This can be obtained by coating the material, dose the material in separate layers in a tablet or separate pouches in a water soluble sachet or form, or separate chambers in a bottle, complexing the material with cyclodextrin, etc.

### BLEACH ACTIVATORS

The composition of the present invention may optionally comprise one or more bleach activators.

When inorganic peroxygen based bleaching agents are applied a bleach activator provides the possibility to use a low(er) temperature to achieve the desired bleaching performance.
The bleach activator reacts with the peroxygen to form an organic peracid. Depending from the used bleach activator these peracids can have a hydrophobic or a hydrophilic character.

Bleaching agents that can be used in ADD compositions include, but are not limited to, tetraacetylethylenediamine (TAED), sodium nonanoyloxybenzene sulphonate (NOBS), acetyl caprolactone, and N-methyl morpholinium acetonitrile and salts thereof (such as Sokalan BMG from BASF).

### BLEACH CATALYSTS

The composition of the present invention may optionally comprise one or more bleach catalysts.

A bleaching catalyst can be used besides to or instead of a bleach activator. Most activators used are complexes with transition metal ions with organic ligands. Some metal ions that are applied in catalysts are Mn, Fe, Cu, CO, Mo. Complexes with these metals can interact with inorganic and organic peroxygen compounds to form reactive intermediates.

Use of bleach catalyst can result in achieving the desired bleaching performance at an even lower temperature than needed for bleach activators.

Bleaching catalysts that can be used in ADD compositions are intensively described in the state of the art. These include, but are not limited to, a complex of manganese(IV) with 1,4,7-trimethyl-1,4,7-triazacyclononane (MnMeTACN), tris[2-(salicylideneamino)ethyl]amine manganese(III).

### DYES

The composition of the present invention may optionally comprise one or more dyes.

The dye is used to color the detergent, parts of the detergent or speckles in the detergent. This will make the product more attractive to the consumer.

Dyes that can be used in ADD compositions include, but are not limited to, Nylosan yellow N-7GL, Sanolin brilliant flavine 8GZ, Sanolin yellow BG, Vitasyn quinoline yellow 70, Vitasyn tartrazine X90, Puricolor yellow AYE23, Basacid yellow 232, Vibracolor yellow AYE17, Simacid Eosine Y, Puricolor red ARE27, Puricolor red ARE14, Vibracolor red ARE18, Vibracolor red ARE52, Vibracolor red SRE3, Basacid red 316, Ponceau SX, Iragon blue DBL86, Sanolin blue EHRL, Sanolin turquoise blue FBL, Basacid blue 750, Iragon blue ABL80, Vitasyn blue AE90, Basacid blue755, Vitasyn patentblue V 8501, Vibracolor, green AGR25.

### PERFUME

The composition of the present invention may optionally comprise one or more perfumes.

The perfume(s) is added to the detergent to improve the sensorial properties of the product or of the machine load after cleaning.

The perfume can be added to the detergent as a liquid, paste or as a co-granulate with a carrier material. To improve the stability of the perfume it can be e.g. used in an encapsulated form or as a complex like for example a perfume-cyclodextrine complex.

Also perfumes that have a deodorizing effect can be applied. These perfumes encapsulate malodors by binding to their sulfur groups.

### PROCESS AIDS

The composition of the present invention may optionally comprise one or more process aids. Process aids are used to improve certain product properties.

The process aids used in ADD compositions commonly are used for various purposes often depending of the physical form of the final product. Process aids for example can optimize compressibility, friability, toughness, disintegration speed, hygroscopicity, density, free flowing properties, stickiness, etc. of an ADD product in a certain physical shape.

Process aids that can be used in ADD compositions include, but are not limited to, polyalkylene glycol (e.g. polyethylene glycol, polypropylene glycol), sorbitol, starch derivates, disintegration agents (e.g. polyvinylpyrrolidone derivates, cellulose derivates, etc.), acetate salts, soda ash, sodium sulphate, talc, silicates, glycerin, water and stearates.

### PHYSICAL SHAPES

Detergents compositions can be offered to consumers in a self-dose, in a pre-dosed system or in a mixture of both.

### Self-dose

In the self-dose system the consumer himself decides how much he/she wants to dose of the detergent. A dosing-advise is often provided on the package of the detergent. Such detergents are often provided in the form of a homogeneous mass, most commonly they are used in the forms of powder, granulates, liquid, gel, foam, paste and pellets. The average particle size of the powder or granulate detergent compositions most commonly varies between 0.05 millimeters and 2.0 millimeters.

### Pre-dose

In the pre-dosed system the consumer has more convenience since he/she only has to dose (one) unit(s) of a pre-dosed detergent composition. There can be any limitations due to the conditions the dose functions most optimal. These are usually communicated via the package of the detergent. The pre-dosed detergent unit can be provided e.g. in the form of a tablet, a bar, a pouch or a container. The pre-dosed detergent unit can have a weight that most commonly varies between 5 and 80 grams.

### Tablet

A tablet can have various shapes where droplet, rectangular, rhomboidal, circular, cylindrical, round, cubic, square and oval are examples of the possibilities. Tablets can be provides as mono layer or as multilayer tablets. They can have one or more cavities that most commonly are filled with another smaller tablet, a paste, a granulate/powder, a gel, a solid shaped or compressed body, etc. The tablets can also be cored, e.g. a tablet within a tablet. For example Linotech Mercury tabletting presses can be provided with a system to produce cored tablets.

Tablets are often wrapped in a foil. This foil can be water soluble like polyvinyl alcohol or copolymers based on it. The foil can also be not water soluble. Than the base of the most commonly used foils is (bi)oriented polypropylene or high density polyethylene.

### Pouch

A pouch can be made of various materials. In the past pouches were often not water soluble, whereas now most pouches are made of water soluble material. This material is often polyvinyl alcohol or based on it. A pouch can have one, two or more chambers that contain detergents or parts of a detergent composition. These chambers keep the various ingredients separated from each other. A pouch can contain detergent compositions in various physical shapes and combinations thereof. An example is that one part of the detergent composition is provided as a powder and a second part as a liquid or gel. These two parts can be provided in one pouch in two separate chambers.

### Container

An open rigid container that is made of water soluble materials. This container can have one, two or more chambers. These chambers are filled with the detergent composition. The container is afterwards closed with a water soluble material. Such containers are described in EP-A 1 647 494, WO 2005/058700 and EP-A 1 624 017.

### Mixture of self-dose and pre-dosed

When detergent compositions are provided as a mixture of self-dose and pre-dosed systems one should self dose a number of pre-dosed units. The dosing advise is often provided on the package of the detergent. Dependent from the conditions (like amount of soil, water hardness, etc.) the consumer should decide to dose one, two, three or more of the pre-dosed units in the (dish)washing machine.

### EXAMPLES

### EXAMPLE 1

An example of a surfactant having complexing groups is a C16/C18 ethoxylated surfactant having 25 EO groups that is phosphonated with polyphosphoric acid.
Another example is a C16/C18 ethoxylated surfactant having 25 EO groups that is phosphonated with phosphorpentoxide.
Another example is a C12/C15 ethoxylated surfactant having 20 EO groups that is phosphonated with polyphoshoric acid.
Another example is a C12/C15 ethoxylated surfactant having 20 EO groups that is phosphonated with phosphorpentoxide.
These examples can result in mono-, di- or tri esters or mixtures there of.

Further examples are the commercial available phosphate esters PEX-100 and PEX-130 from the firm ADD APT Chemicals.

## Claims

1. Detergent composition comprising at least one surfactant having the general formula [R¹O(CH₂CH₂O)ₓ(CH₂CH₂CH₂O)y]ₙZ wherein R¹ refers to a linear or branched, saturated or unsaturated hydrocarbon group having 6 to 30 carbon atoms, preferably 8 to 24 carbon atoms, x is an integer from 6 to 200, y is 0 or an integer of less than 100 and x+y is less than 200, Z is a complexing group, derived from phosphoric compounds, phosphonates, sulphonic compounds, sulphonates, or amino polycarboxylic acids and n is an integer from 1, 2 or 3.

2. Detergent composition according to claim 1, wherein the surfactant having the complexing group(s) is a mono- or diester.

3. Detergent composition according to claim 1, wherein the surfactant is obtained by reaction of an alcohol having the general formula R¹O(CH₂CH₂O)ₓ(CH₂CH₂CH₂O)_{y}H with an acid or an oxide, wherein R¹, x and y are as in claim 1.

4. Detergent composition according to any of claims 1 to 3, wherein the surfactant is present in an amount of 0.2% to 20% of the total weight of the composition.

5. Surfactant having the general formula [R¹O(CH₂CH₂O)ₓ(CH₂CH₂CH₂O)_{y}]ₙZ wherein R¹ refers to a linear or branched, saturated or unsaturated hydrocarbon group having 6 to 30 carbon atoms, preferably 8 to 24 carbon atoms, x is an integer from 6 to 200, y is 0 or an integer of less than100 and x+y is less than 200, Z is a complexing group, derived from phosphoric compounds, phosphonates, sulphonic compounds, sulphonates, or amino polycarboxylic acids and n is an integer from 1, 2 or 3.

6. Use of a surfactant according to claim 5 in a detergent composition.
